# EUROPÄISCHE PATENTSCHRIFT

(11) **EP 3 848 242 B1**
(45) Veröffentlichungstag und Bekanntmachung des Hinweises auf die Patenterteilung: **16.11.2022**
(21) Anmeldenummer: 21150387.5
(22) Anmeldetag: 06.01.2021
(51) Int. Cl.: B60N 2/865, B60N 2/888, B60N 2/42

(54) **KOPFSTÜTZE**
HEADREST
APPUI-TÊTE

(30) Priorität: 13.01.2020 DE 102020100571
(43) Veröffentlichungstag der Anmeldung: 14.07.2021
(73) Patentinhaber: GRAMMER AG, 92289 Ursensollen (DE)
(72) Erfinder: Beil, Udo, 90530 Wendelstein (DE)
(74) Vertreter: Roche, von Westernhagen & Ehresmann

(56) Entgegenhaltungen:
- EP-A1- 1 288 062
- DE-A1- 10 202 598
- DE-A1- 10 304 879
- DE-A1-102008 022 108
- DE-U1- 20 122 155
- US-A1- 2003 057 748

## Beschreibung

Die Erfindung betrifft eine Kopfstütze für einen Fahrzeugsitz. Ein Land-, Luft- oder Wasserfahrzeug kann ein Fahrzeug im Sinne der Erfindung sein.

Eine solche Kopfstütze ist aus offenkundiger Vorbenutzung bekannt. Die Kopfstütze umfasst eine Basis und ein relativ zu der Basis in positive oder negative X-Richtung, d.h. in Richtung des Kopfes des Sitzinsassen oder in entgegengesetzte Richtung bewegbares Kopfanlageteil. Das Kopfanlageteil ist mittels an der Kopfstütze gehaltenen Zahnschienen und an dem Basisteil gehaltenen Zahnrädern, die mit den Zahnschienen in Eingriff stehen, gelagert.

Des Weiteren sind aus dem Stand der Technik Kopfstützen bekannt, die eine Basis und ein in X-Richtung bewegbares Kopfanlageteil aufweisen, wobei an der Kopfstütze wenigstens eine Säule befestigt ist, die in einer komplementären hohlzylindrischen Führung der Basis in X-Richtung geführt ist.

Nachteilig an dem vorgenannten Stand der Technik ist in beiden Fällen, dass in der hinteren Position der Kopfstütze die kopfanlageseitigen Führungsmittel relativ weit nach hinten herausragen, wodurch die Kopfstütze insgesamt in X-Richtung relativ ausladend ist.

Die DE 10 2008 022 108 A1 beschreibt eine Sitzlehne mit einer integrierten crashaktiven Kopfstütze. Die Kopfstütze umfasst ein Kopfanlageteil, welches relativ zu einem lehnenfesten Rahmen zum Kopf des Sitzinsassen bewegbar ist. Zur Führung des Kopfanlageteils weist die Kopfstütze zwei Verbindungen 27 auf, die einen Winkel von 90 zueinander bilden. Jeder Verbindung umfasst zwei Verbindungsglieder, die untereinander schwenkbar miteinander verbunden sind und darüber hinaus ist ein Verbindungsglied an dem sitzfesten Rahmen und das andere Verbindungsglied an dem Kopfanlageteil schwenkbar angelenkt.

Mit einem Arretiermechanismus 76 kann das Kopfanlageteil in der ausgefahrenen Position arretiert werden. Der Arretiermechanismus umfasst einen Mittelabschnitt sowie zwei Arretierschenkel. Die Arretierschenkel gleiten bei der Bewegung in die ausgefahrene Position an Zähnen entlang, die eine Bewegung der Arretierschenkel in die ausgefahrene Position erlauben, eine entgegengesetzte Bewegung aber verhindern. Das Kopfanlageteil stützt sich dabei an dem Mittelabschnitt ab.

Die US 2003/057748 A1 betrifft eine Kopfstütze, mit einer Basis, die mittels Tragstangen an der Rückenlehne eines Fahrzeugsitzes gelagert ist. Ein Kopfanlageteil ist aus einer Grundposition in eine Crashposition bewegbar. Das Kopfanlageteil ist mittels zwei Lenkern, die untereinander ein Gelenk bilden und wobei ein Lenker an der Basis und der andere Lenker an dem Kopfanlageteil angelenkt ist, bewegbar geführt. Im Falle eines Heckaufpralls wird eine Verriegelung gelöst, so dass sich das Kopfanlageteil, welches von Federn in die Crashposition belastet ist, in die Crashposition bewegen kann. Eine Rückbewegung wird mittels einer Klemmvorrichtung 224 / 225 verhindert, an welcher der basisseitige Lenker drehbar gelagert ist, wobei die Buchse drehbar auf der jeweiligen Tragstange gelagert ist.

Die DE 102 02 598 A1 betrifft eine Kopfstütze mit einem Kopfanlageteil, welches mittels eines Viergelenks an der Traverse eines Tragstangenbügels gelagert ist. In einer Ausgangsstellung ragen die versetzt angeordneten Lenker des Viergelenks von der Traverse nach unten. Mittels einer Schlingfederarretierung wird das Viergelenk in der jeweiligen Position gehalten. Die Arretierung kann mittels eines Tasters zum Einstellen der Position des Kopfanlageteils gelöst werden.

Es war Aufgabe der Erfindung eine Kopfstütze zu schaffen, die in X-Richtung schmalbauend ausgebildet ist, wenn das Kopfanlageteil sich in seiner hintersten Position befindet, d.h., wenn das Kopfanlageteil in einer Position angeordnet ist, in der es dem Basisteil am nächsten ist.

Die Aufgabe wurde gelöst durch eine Kopfstütze mit den Merkmalen des Anspruchs 1.

Die Kopfstütze umfasst eine Basis. Die Basis kann von einem an einer Haltevorrichtung, wie z.B. Tragstangen oder einem Tragstangenbügel, gelagerten Köper gebildet sein, welcher mittels der Haltevorrichtung an der Rückenlehne eines Fahrzeugsitzes gelagert ist. Mittels der Haltevorrichtung kann die Basis z.B. höhenverstellbar an der Rückenlehne des Fahrzeugsitzes gelagert sein. Alternativ ist die Basis z.B. von der Rückenlehnenstruktur selbst gebildet. Das kann z.B. bei einem Integralsitz der Fall sein, bei welchem die Basis Bestandteil der Rückenlehnenstruktur ist.

Ferner umfasst die Kopfstütze ein Kopfanlageteil. Das Kopfanlageteil ist mit einer Führungsvorrichtung die mit dem Kopfanlageteil verbunden ist und mit der Basis verbunden ist, relativ zu der Basis in Richtung des Kopfes des Sitzinsassen und in entgegengesetzte Richtung zwischen einer hinteren Grundstellung und einer vordersten Ausfahrstellung bewegbar. Die Führungsvorrichtung lagert und führt das Kopfanlageteil bei der Bewegung zwischen der Grundstellung und der Ausfahrstellung.

Die Kopfstütze ist mit einer Verriegelungsvorrichtung versehen, mit welcher das Kopfanlageteil in wenigstens einer Position der Bewegung zwischen der Grundstellung und der Ausfahrstellung verriegelbar ist. D.h., das Kopfanlageteil ist in der Grundstellung und / oder in der Ausfahrstellung und / oder in wenigstens einer Position zwischen der Grundstellung und der Ausfahrstellung verriegelbar.

Erfindungsgemäß umfasst die Führungsvorrichtung wenigstens eine erste Gelenkeinheit und wenigstens eine zweite Gelenkeinheit. Die Gelenkeinheiten lagern und führen das Kopfanlageteil derart, dass es lediglich Freiheitsgrade in eine erste Richtung zum Kopf des Sitzinsassen und in eine zweite, entgegengesetzte Richtung hat. Jede der Gelenkeinheiten umfasst mindestens zwei Lenker, wobei ein erster Lenker ein erstes Scharniergelenk mit der Basis bildet und ein zweiter Lenker ein zweites Scharniergelenk mit dem Kopfanlageteil bildet. Der erste Lenker und der zweite Lenker bilden miteinander ein drittes Scharniergelenk, wobei Schwenkachsen aller Scharniergelenke einer Gelenkeinheit parallel angeordnet sind.

Auf diese Weise können sich die Lenker einer Gelenkeinheit zwischen einer gefalteten Position und einer gestreckten Position bewegen, wobei sie in der gefalteten Position sehr wenig Platz beanspruchen. In der Grundstellung sind die Lenker jeder Gelenkeinheit in der gefalteten Position und in der Ausfahrstellung sind die Lenker in der gestreckten Position angeordnet. Das Kopfanlageteil kann sich daher in der Grundstellung sehr nah an die Basis anlegen. Die Kopfstütze ist aus diesem Grunde in der Grundstellung sehr schmalbauend in der Seitenansicht. Die Schwenkachsen der Scharniergelenke der ersten Gelenkeinheit und die Schwenkachsen der Scharniergelenke der zweiten Gelenkeinheit bilden etwa einen 90°-Winkel.

Bei einem sogenannten Integralsitz bildet die Rückenlehne des Fahrzeugsitzes eine geschlossene Fläche, die über den Kopfbereich des Fahrers hinaus reicht. Eine in x-Richtung nach hinten ausladende Kopfstütze kann wegen des benötigten Bauraumes einer solchen Kopfstütze nicht in dem Integralsitz verbaut werden, da sich der Integralsitz zunehmend nach oben hin bezüglich der X-Richtung verjüngt und somit lediglich wenig Platz für eine Kopfstütze mit einem in X-Richtung verstellbaren Kopfanlageteil zur Verfügung stellt. Die schmalbauende Einbindung der erfindungsgemäßen Lösung wäre auch in der Grundstellung mit der Rückenlehne bündig, d.h. sie wäre für den geringen Bauraum eines Integralsitzes geeignet. Außerdem wäre erfindungsgemäß das Kopfanlageteil in der Grundstellung auf der Kopfanlageseite nicht von einem herkömmlichen Integralsitz ohne X-verstellbarem Kopfanlageteil zu unterscheiden. Die erfindungsgemäße Lösung eignet sich daher besonders auch für einen Integralsitz mit einer Basis, die Teil der Rückenlehnenstruktur oder mit dieser fest verbunden ist und einem relativ zu der Basis in X-Richtung bewegbarem Kopfanlageteil.

Die Schwenkachsen der Scharniergelenke der ersten Gelenkeinheit und die Schwenkachsen der Scharniergelenke der zweiten Gelenkeinheit bilden z.B. einen 90°-Winkel mit einer Achse, die parallel zu der Bewegungsrichtung des Kopfanlageteils ausgebildet ist.

Die Länge des ersten Lenkers der ersten Gelenkeinheit und die Länge des ersten Lenkers der zweiten Gelenkeinheit können z.B. gleich oder unterschiedlich sein. Die Länge des zweiten Lenkers der ersten Gelenkeinheit und die Länge des zweiten Lenkers der zweiten Gelenkeinheit können z.B. gleich oder unterschiedlich sein. Wenn sich die Länge der Lenker der ersten Gelenkeinheit von der Länge der Lenker der zweiten Gelenkeinheit unterscheidet, kann zwischen den Lenkern der ersten Gelenkeinheit und zwischen den Lenkern der zweiten Gelenkeinheit je nach X-Position des Kopfanlageteils ein unterschiedlicher Winkel ausgebildet sein.

Der erste Lenker und der zweite Lenker jeder Gelenkeinheit bilden z.B. einen Winkel, wobei sich Längsachsen der Lenker in der Grundstellung in einer gefalteten Position und in der Ausfahrstellung in einer gestreckten Stellung zueinander befinden. In der Grundstellung sind die Längsachsen parallel oder nahezu parallel zueinander angeordnet. Zwischen dem ersten Lenker und dem zweiten Lenker ist z.B. ein sehr kleiner Winkel, z.B. ein Winkel ≤ 5°, insbesondere 0°, ausgebildet. Auf diese Weise nimmt die Führungsvorrichtung in der Grundstellung wenig Bauraum in Anspruch. In der Ausfahrstellung ist zwischen dem ersten Lenker und dem zweiten Lenker z.B. ein Winkel ≤ 180° ausgebildet.

Gemäß einer Ausführungsform sind die Lenker in einer Raumdimension rechtwinklig zu der Längsachse der Lenker flachbauend ausgebildet, derart, dass das Sandwich aus beiden Lenkern in der gefalteten Position bezüglich einer Achse, die parallel zu den Bewegungsrichtungen des Kopfanlageteils ausgebildet ist, eine geringe Erstreckung hat. Auf diese Weise kann eine in der Seitenansicht schmalbauende Konstruktion gewährleistet werden.

Um zu verhindern, dass die Längsachsen des ersten Lenkers und des zweiten Lenkers einen 180°-Winkel zueinander bilden, bildet der erste Lenker erste Anschlagmittel und der zweite Lenker zweite Anschlagmittel aus, wobei in der gestreckten Position der Eingriff der Anschlagmittel einen Maximalwinkel der Lenker definiert. Der Maximalwinkel ist z.B. kleiner als 180°. Auf diese Weise können sich die Lenker nicht in eine 180°-Position bewegen, aus welcher das Einknicken des dritten Gelenks und damit die Bewegung in die Grundposition nicht gewährleistet sein könnten.

Die Längsachsen der Lenker bilden gemäß einer Ausführungsform in der Ausfahrstellung einen 180°-Winkel. In diesem Fall kann eine Zugfeder zwischen den Lenkern oder eine Drehfeder in dem Gelenk zwischen dem ersten und dem zweiten Lenker das Einknicken unterstützen und die sichere Bewegung von der Ausfahrposition in die Grundposition gewährleisten.

Die Führungsvorrichtung umfasst z.B. zwei erste Gelenkeinheiten und zwei zweite Gelenkeinheiten. Auf diese Weise können die beiden Gelenkeinheiten an unterschiedlichen Positionen des Kopfanlageteils und des Basisteils angeordnet werden. Auf diese Weise wird eine sichere und wackelfreie Führung gewährleistet.

Um wackelfreie Führung zu gewährleisten, ist es vorteilhaft, wenn die beiden ersten Gelenkeinheiten und die beiden zweiten Gelenkeinheiten voneinander beabstandet an dem Kopfanlageteil und an der Basis angeordnet sind.

Insbesondere sind die beiden ersten Gelenkeinheiten bezüglich einer Erstreckung des Kopfanlageteils in Y-Richtung an gegenüberliegenden Endbereichen befestigt und die beiden zweiten Gelenkeinheiten sind bezüglich einer Erstreckung des Kopfanlageteils in Z-Richtung an gegenüberliegenden Endbereichen des Kopfanlageteils befestigt. Auf diese Weise wird eine besonders gradlinige und wackelfreie Führung gewährleistet.

Die Verriegelungsvorrichtung weist erfindungsgemäß auf einer ersten Seite des Kopfanlageteils eine erste Stützeinrichtung und auf einer der ersten Seite gegenüberliegenden Seite des Kopfanlageteils eine zweite Stützeinrichtung auf, wobei jede Stützeinrichtung wenigstens einen Lenker umfasst, wodurch die auf das Kopfanlageteil einwirkende Kräfte zwischen den Stützeinrichtungen auftreffen, so dass keine Kippmomente in dem Kopfanlageteil entstehen, wobei der Lenker z.B. in der Grundstellung etwa parallel zu einer von der Basis aufgespannten Ebene angeordnet ist und in der Ausfahrstellung einen Winkel mit der Ebene bildet. Erfindungsgemäß bildet ein erster Bereich des Lenkers mit der Basis oder dem Kopfanlageteil ein Gelenk und ein zweiter Bereich des Lenkers ist mittels einer Führung in unterschiedliche Positionen bewegbar geführt und in wenigstens einer Position mittels eines Riegels verriegelbar.

Z.B. bildet eines der Bauteile von Basis oder Kopfanlageteil eine Gelenkführung für den zweiten Bereich des Lenkers aus, in welcher ein Vorsprung des Lenkers auf einer Bahn in zwei entgegengesetzte Bahnorientierungen geführt ist. Es ist dann möglich, den Vorsprung in unterschiedlichen Positionen mittels eines Riegels zu verriegeln, wodurch das Kopfanlageteil in der eingestellten Position arretiert ist.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

Es zeigen:
- Fig. 1: eine perspektivische Ansicht der Kopfstütze, wobei sich das Kopfanlageteil in einer Grundposition befindet,
- Fig. 2: eine perspektivische Ansicht der Kopfstütze, wobei sich das Kopfanlageteil in einer Ausfahrstellung befindet,
- Fig.3: eine perspektivische Rückansicht der Kopfstütze gemäß Fig. 2,
- Fig.4: eine Seitenansicht der Kopfstütze in der Grundposition,
- Fig. 5: eine Seitenansicht der Kopfstütze in der Ausfahrposition,
- Fig.6: eine Draufsicht auf die Kopfstütze gemäß Ansichtspfeil C in Fig. 4,
- Fig.7: eine Draufsicht auf die Kopfstütze gemäß Ansichtspfeil D in Fig. 5,
- Fig. 8: eine Schnittdarstellung gemäß Schnittlinie A - A in Fig. 6
- Fig.9: eine Schnittdarstellung gemäß Schnittlinie B - B in Fig. 7.
- Fig.10: eine perspektivische Darstellung eines zweiten Ausführungsbeispiels der erfindungsgemäßen Kopfstütze, wobei sich das Kopfanlageteil in der Ausfahrposition befindet,
- Fig. 11: eine Draufsicht auf die Kopfstütze gemäß Fig. 10,
- Fig. 12: eine Seitenansicht eines dritten Ausführungsbeispiels der erfindungsgemäßen Kopfstütze, wobei sich das Kopfanlageteil in der Ausfahrposition befindet,
- Fig. 13: eine Draufsicht gemäß Ansichtspfeil E in Fig. 12.

Die Kopfstütze insgesamt ist in den Fig. mit dem Bezugszeichen 10 bezeichnet.

Die Kopfstütze 10 ist in den Fig. der Übersichtlichkeit halber ohne Polster und Verkleidung dargestellt. Die Kopfstütze 10 weist im vorliegenden Ausführungsbeispiel eine Haltevorrichtung 11 auf, mit welcher eine Basis 13 der Kopfstütze 10 an einem Fahrzeugsitz gehalten ist. Die Haltevorrichtung 11 ist aber für die Erfindung nicht wesentlich. Die Basis 13 könnte alternativ auch unmittelbar mit dem Fahrzeugsitz verbunden sein oder Teil des Fahrzeugsitzes sein. Die Haltevorrichtung 11 umfasst Tragstangen 12a und 12b, wobei ein unterer Endbereich 14 zur Halterung in Aufnahmen eines Fahrzeugsitzes vorgesehen sind und ein oberer Endbereich 15 zur Lagerung der Basis 13 vorgesehen ist. An einem Kopfanlageteil 16 ist eine Kopfanlagefläche 17 ausgebildet.

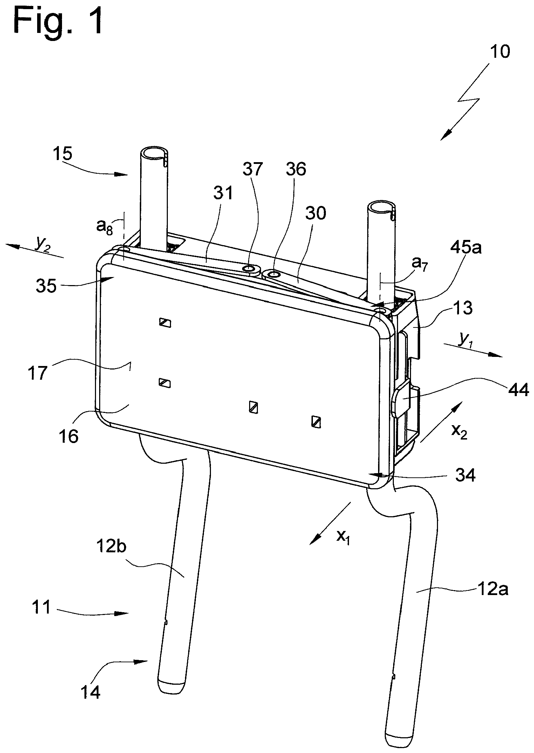

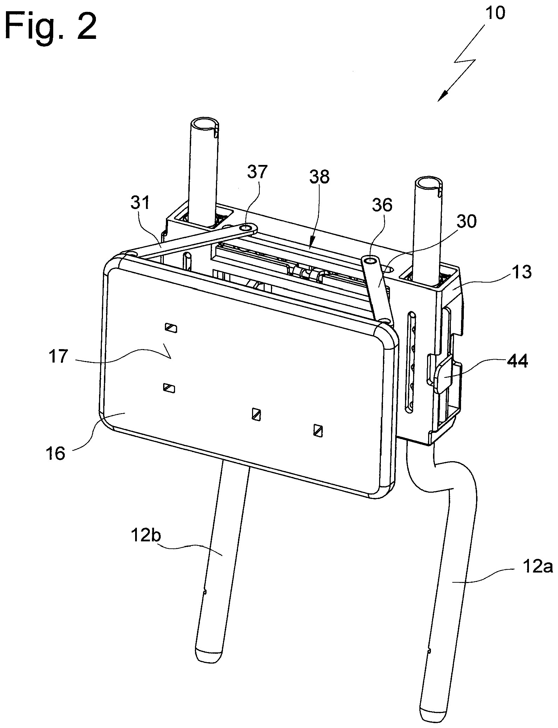

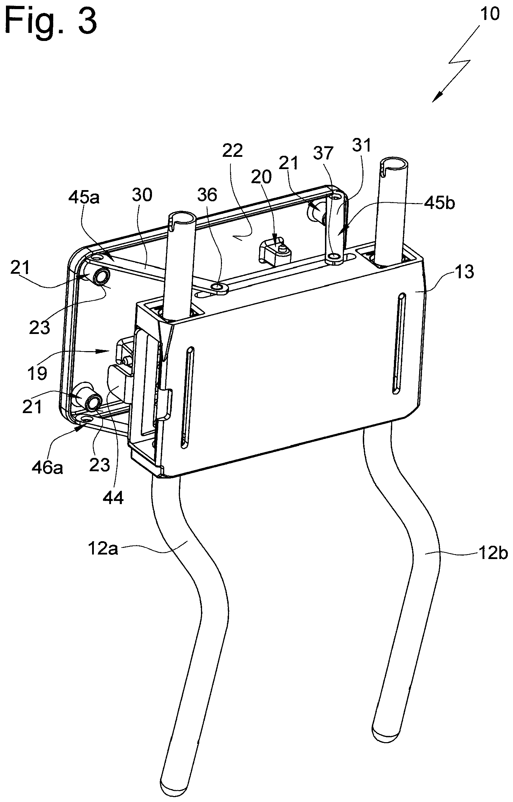

Mittels einer in Fig. 1 nicht erkennbaren Führungsvorrichtung 18 ist das Kopfanlageteil 16 zwischen der in Fig. 1 dargestellten Grundposition, in welcher das Kopfanlageteil 16 soweit wie möglich nach hinten in Richtung x2 an die Basis 13 zurückbewegt ist, und einer Ausfahrposition, in welcher das Kopfanlageteil 16 soweit wie möglich nach vorne in Richtung x1 bewegt ist. Die Ausfahrposition ist in den Fig. 2 und 3 dargestellt. Es ist erkennbar, dass das Kopfanlageteil 16 in den der Ausfahrposition bezüglich der Grundposition weiter von der Basis 13 beabstandet ist.

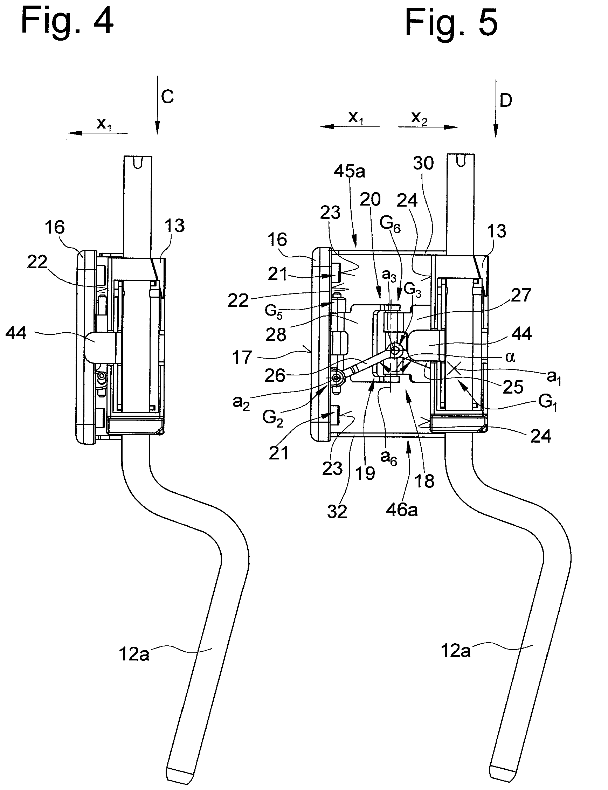

In Fig. 3 ist erkennbar, dass das Kopfanlageteil 16 mit vier Zapfen 21 versehen ist, die bezüglich einer Rückfläche 22 des Kopfanlageteils 16 in Richtung x2 vorragen. Die Zapfen 21 bilden eine Anschlagfläche 23 aus, die in der Grundposition des Kopfanlageteils 16 mit einer Außenfläche 24 (siehe Fig. 4) der Basis 13 in Kontakt steht. Auf diese Weise können in der Grundposition zusätzlich über die Zapfen 21 Kräfte auf die Basis 13 übertragen werden.

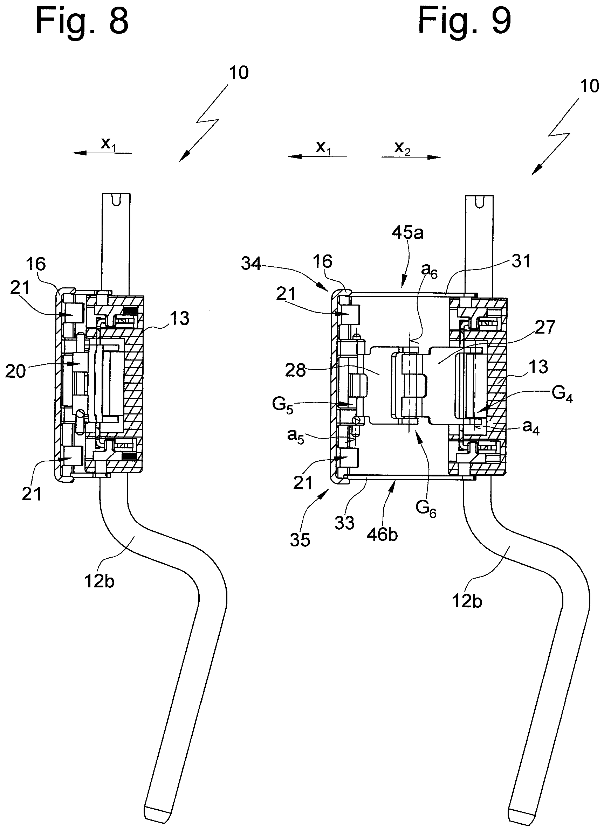

Gemäß Fig. 5 weist die Gelenkeinheit 19 einen ersten Lenker 25 und einen zweiten Lenker 26 auf. Der Lenker 25 bildet mit der Basis 13 ein Scharniergelenk G1 mit einer Schwenkachse a1, und der zweite Lenker 26 bildet mit dem Kopfanlageteil 16 ein Scharniergelenk G2 mit einer Schwenkachse a2. Die Lenker 25 und 26 bilden miteinander ein Scharniergelenk G3 mit einer Schwenkachse a3. Die Schwenkachsen a1, a2 und a3 sind parallel zueinander und parallel zu einer y-Achse angeordnet (siehe die Fig. 5 bis 9).

Die Gelenkeinheit 20 umfasst einen ersten Lenker 27 und einen zweiten Lenker 28. Der Lenker 27 bildet mit der Basis 13 ein Scharniergelenk G4 mit einer Schwenkachse a4 und mit dem Kopfanlageteil 16 ein Scharniergelenk G5 mit einer Schwenkachse a5. Die Lenker 27 und 28 bilden untereinander ein Scharniergelenk G6 mit einer Schwenkachse a6. Die Schwenkachsen a4, a5 und a6 sind parallel zueinander und parallel zu einer Z-Achse angeordnet.

Jede der Schwenkachsen a1, a2 und a3 bildet etwa einen 90°-Winkel zu jeder der Schwenkachsen a4, a5 und a6. Je nach Elastizität der Konstruktion und des Materials des Kopfanlageteils 16, der Lenker 25, 26, 27 und 28 sowie der Basis, kann der Winkel um bis zu ± 10° größer oder kleiner ausgebildet sein.

Die Gelenkeinheit 19 erlaubt eine Bewegung des Kopfanlageteils 16 in Richtung x1 und x2 sowie eine Drehung des Kopfanlageteils 16 um die Gelenke G1, G2 und G3. Die Gelenkeinheit 20 erlaubt eine Bewegung des Kopfanlageteils 16 in Richtung x1 und x2 und verhindert die Drehung um die Gelenke G1, G2 und G3. Das Kopfanlageteil 16 kann sich daher mit den Gelenkachsen 19 und 20 ausschließlich in die Richtungen x1 und x2 bewegen, wobei sich ein Winkel α zwischen den Lenkern 25 und 26 der Gelenkeinheit 19 und ein Winkel β zwischen den Lenkern 27 und 28 der Gelenkeinheit 20 um den gleichen Betrag vergrößert, wenn das Kopfanlageteil 16 in Richtung x1 bewegt wird und verkleinert, wenn das Kopfanlageteil in Richtung x2 bewegt wird. Das ist der Fall, weil die Längen der Lenker 25 und 26 der Gelenkeinheit 19 die gleiche Länge aufweisen, wie die Längen der Lenker 27 und 28 der Gelenkeinheit 20. Sind die Längen der Lenker der Gelenkeinheit 19 und der Gelenkeinheit 20 unterschiedlich, können die Winkel α und β unterschiedlich groß sein.

Die Gelenkeinheit 19 weist in diesem Ausführungsbeispiel eine sich in y-Richtung erstreckende Breite auf, die etwa ein Viertel der Breite des Kopfanlageteils beträgt. Die Gelenkeinheit 20 weist eine sich in z-Richtung erstreckende Höhe auf, die etwa einem Drittel der Höhe des Kopfanlageteils 16 entspricht. Auf die Erstreckung der Gelenkeinheit 19 in y-Richtung und der Gelenkeinheit 20 in Z-Richtung kommt es es nur insoweit an, als eine ausreichende Stabilität zur Übertragung der von dem Kopfanlageteil 16 aufgenommenen Momente gewährleistet sein muss. In diesem Zusammenhang könnten alternativ entsprechend einem weiter unten beschriebenen Ausführungsbeispiel auch zwei oder mehr voneinander beabstandete Gelenkeinheiten 19 und zwei oder mehr voneinander beabstandete Gelenkeinheiten 20 zwischen der Basis 13 und dem Kopfanlageteil 16 ausgebildet sein.

Zwischen den Lenkern 25 und 26 der Gelenkeinheit 19 ist ein Winkel α und zwischen den Lenkern 27 und 28 der Gelenkeinheit 20 ist ein Winkel β ausgebildet. Die Lenker 25 und 26 sowie die Lenker 27 und 28 weisen Anschläge auf, die gewährleisten, dass die Winkel kleiner als 180° bleiben. Auf diese Weise wird sichergestellt, dass die Gelenke immer in die gleiche Richtung einknicken und die Lenker nicht in einer TotpunktStellung angeordnet werden. Wie oben erwähnt, könnten die Winkel α und / oder β alternativ auch in der Ausfahrposition einen Betrag von 180° aufweisen. In diesem Fall kann z.B. eine Feder die Lenker der Gelenkeinheit 19 und / oder der Gelenkeinheit 20 derart belasten, dass das Einknicken unterstützt wird.

Die Kopfstütze 10 umfasst eine Verriegelungsvorrichtung 29 zur stufenweisen Verriegelung des Kopfanlageteils in unterschiedlichen x-Positionen. Es sei an dieser Stelle darauf hingewiesen, dass es bei der Erfindung nicht in erster Linie auf die Art und Weise der Ausbildung der Verriegelungsvorrichtung ankommt. Im vorliegenden Ausführungsbeispiel weist die Kopfstütze 10 zur Verriegelung des Kopfanlageteils 16 eine Stützeinrichtung 45a, umfassend zwei Lenker 30 und 31, die in einem oberen Bereich 34 des Kopfanlageteils 16 angeordnet sind und eine Stützeinrichtung 45b, umfassend zwei Lenker 32 und 33, die in einem unteren Bereich 35 des Kopfanlageteils 16 angeordnet sind, auf.

Der Lenker 30 ist an einem ersten Endbereich um eine Schwenkachse a7 eines Schwenkgelenks G7 schwenkbar an dem Kopfanlageteil 16 gelagert. Der Lenker 31 ist um eine Schwenkachse a8 eines Schwenkgelenks G8 schwenkbar an dem Kopfanlageteil 16 gelagert. An einem dem ersten Endbereich gegenüberliegenden Endbereich umfasst der Lenker 30 einen Gelenkzapfen 36 und der Lenker 31 einen Gelenkzapfen 37. Beide Gelenkzapfen 36 und 37 sind in einem Langloch 38 schwenkbar geführt und sind in die Richtungen y1 und y2 bewegbar.

An der Basis 13 ist ein Riegel 41, umfassend Anordnungen 39a und 39b von Aussparungen 40 bewegbar gelagert. Der Riegel 41 ist von einer nicht dargestellten Rückstellvorrichtung in Richtung x1 in eine Riegelposition belastet. Der Riegel 41 kann entgegen der Kraft der Rückstellvorrichtung in Richtung x2 in eine Löseposition bewegt werden. Der Gelenkzapfen 36 wirkt mit der Anordnung 39a zusammen und ist in jeder der Aussparungen 40 der Anordnung 39a arretierbar und der Gelenkzapfen 39b wirkt mit der Anordnung 39b zusammen und ist in jeder der Aussparungen 40 der Anordnung 39b arretierbar.

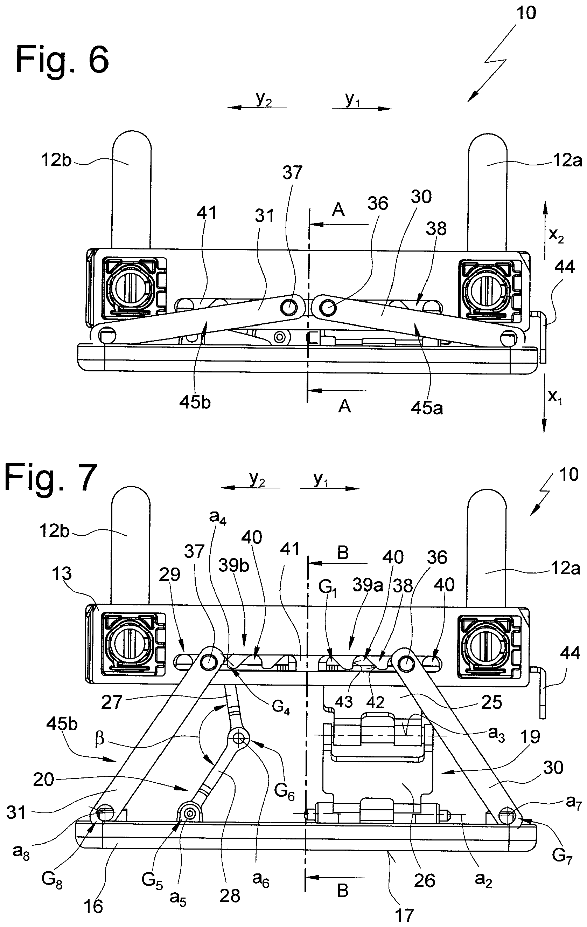

Wenn das Kopfanlageteil 16 aus der Grundposition gemäß Fig. 6 in Richtung x1 in die Position gemäß Fig. 7 bewegt wird, bewegt sich der Gelenkzapfen 36 in Richtung y1 und der Gelenkzapfen 37 in Richtung y2. Aufgrund der Form der Aussparungen, die jeweils eine Schrägflanke 42 und eine Steilflanke 43 umfassen, kann das Kopfanlageteil 16 in Richtung x1 bewegt werden, ohne dass dafür eine Bewegung der Verriegelungsvorrichtung 29 in die Löseposition erforderlich ist. Bei einer Kraft in Richtung x1 auf das Kopfanlageteil 16 bewegen sich der Gelenkzapfen 36 über die Anordnung 39a und der Gelenkzapfen 37 über die Anordnung 39b, wobei die Schrägflanke 42 eine kurzzeitige Bewegung des Riegels 41 entgegen der Kraft der Rückstellvorrichtung in Richtung x2 in die Löseposition bewirkt. Eine Bewegung des Kopfanlageteil 16 in Richtung x2 ist jedoch nicht möglich, ohne dass durch eine Betätigung einer Handhabe 44 der Riegel 41 in die Löseposition bewegt wird.

Die Stützeinrichtung 45b ist in gleicher Weise aufgebaut, wie die Stützeinrichtung 45a. Es wird deshalb nicht gesondert auf darauf eingegangen.

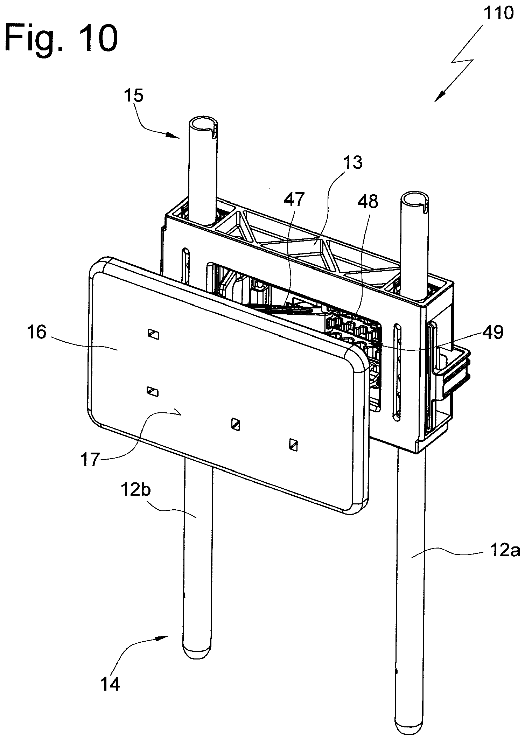

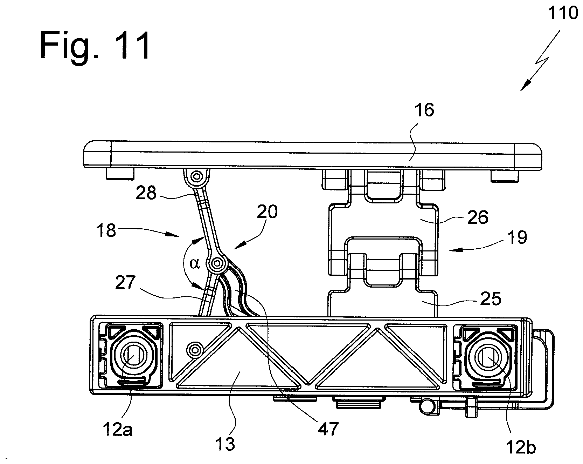

In den Fig. 10 und 11 ist ein zweites Ausführungsbeispiel einer erfindungsgemäßen Kopfstütze 110 dargestellt, dass sich hinsichtlich der ersten Ausgestaltung der Erfindung lediglich dadurch unterscheidet, dass die Verriegelungsvorrichtung 49 in diesem Fall lediglich eine Stützeinrichtung 47 aufweist. Die Stützeinrichtung 47 weist an einem Endbereich einen Vorsprung auf, welcher in einem Langloch der Basis in nicht dargestellter Weise geführt ist. Mittels eines Riegels 48 mit einer Anordnung von Aussparungen ist der Vorsprung in unterschiedlichen Positionen verriegelbar.

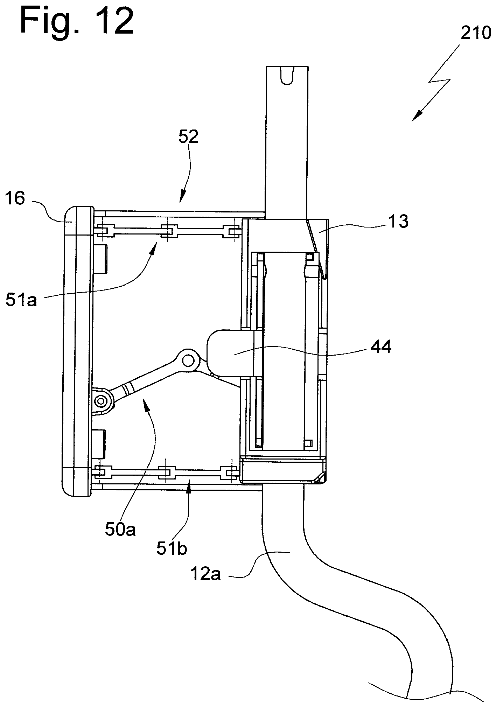

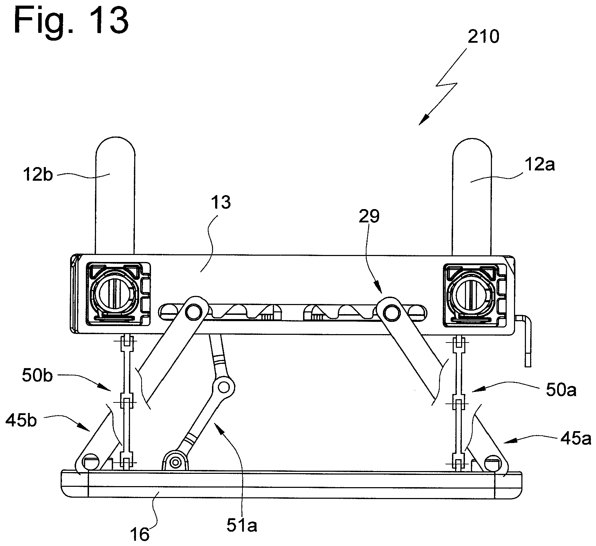

Ein drittes Ausführungsbeispiel einer erfindungsgemäßen Kopfstütze 210 ist in den Fig. 12 und 13 dargestellt. Die Kopfstütze 210 unterscheidet sich von dem ersten Ausführungsbeispiel lediglich in der Ausbildung der Führungsvorrichtung 52. Die Führungsvorrichtung 52 umfasst zwei erste Gelenkeinheiten 50a und 50b sowie zwei zweite Gelenkeinheiten 51a und 51b. Die Gelenkeinheiten 50a und 50b sind in y-Richtung voneinander beabstandet an dem Kopfanlageteil 16 und an dem Basisteil 13 befestigt. Die Gelenkeinheiten 51a und 51b sind in z-Richtung voneinander beabstandet an dem Kopfanlageteil 16 und an dem Basisteil 13 befestigt.

Es sei darauf hingewiesen, dass die Erfindung in gleicher Weise auch bei Kopfstützen Anwendung finden kann, die nicht mittels Tragstangen oder einem Tragstangenbügel an einem Fahrzeugsitz gelagert sind. Z.B. ist in diesem Fall die Basis von einer Struktur des Fahrzeugsitzes gebildet, die unmittelbar mit der Struktur der Rückenlehne verbunden ist oder einstückig mit der Struktur der Rückenlehne ausgebildet ist.

## Patentansprüche

1. Kopfstütze mit einer Basis (13) und einem Kopfanlageteil (16) mit einer Führungsvorrichtung (18, 52), die mit dem Kopfanlageteil (16) verbunden ist und mit der Basis (13) verbunden ist, mittels welcher das Kopfanlageteil (16) relativ zu der Basis (13) in Richtung (x1) des Kopfes des Sitzinsassen und in entgegengesetzte Richtung (x2) zwischen einer hinteren Grundstellung und einer vordersten Ausfahrstellung bewegbar ist, und mit einer Verriegelungsvorrichtung (29, 49), mit welcher das Kopfanlageteil (16) in wenigstens einer Position verriegelbar ist, wobei die Führungsvorrichtung (18, 52) wenigstens eine erste Gelenkeinheit (19) und wenigstens eine zweite Gelenkeinheit (20) umfasst, wobei jede Gelenkeinheit (19, 20) mindestens zwei Lenker (25, 26; 27, 28) umfasst, wobei ein erster Lenker (25, 27) ein erstes Scharniergelenk (G1, G4) mit der Basis (13) bildet und ein zweiter Lenker (26, 28) ein zweites Scharniergelenk (G2, G5) mit dem Kopfanlageteil (16) bildet und wobei der erste Lenker (25, 27) und der zweite Lenker (26, 28) untereinander ein drittes Scharniergelenk (G3, G6) bilden, wobei Schwenkachsen (a1, a2, a3 / a4, a5, a6) aller Scharniergelenke (G1, G2, G3 / G4, G5, G6) einer Gelenkeinheit (19, 20) parallel angeordnet sind, **dadurch gekennzeichnet, dass** die Verriegelungsvorrichtung (29) auf einer ersten Seite des Kopfanlageteils (16) eine erste Stützeinrichtung (45a, 46a) und auf einer der ersten Seite gegenüberliegenden Seite des Kopfanlageteils eine zweite Stützeinrichtung (45b, 46b) aufweist, wobei jede Stützeinrichtung wenigstens einen Lenker (30, 31, 32, 33) umfasst und wobei ein erster Bereich des Lenkers (30, 31, 32, 33) mit der Basis (13) oder dem Kopfanlageteil (16) ein Gelenk bildet und ein zweiter Bereich des Lenkers (30, 31, 32, 33) mittels einer Führung in unterschiedliche Positionen bewegbar geführt und in wenigstens einer Position mittels eines Riegels (41) verriegelbar ist.

2. Kopfstütze nach Anspruch 1, **dadurch gekennzeichnet, dass** die Schwenkachsen (a1, a2, a3) der Scharniergelenke der ersten Gelenkeinheit (19) und die Schwenkachsen (a4, a5, a6) der zweiten Gelenkeinheit (20) etwa einen 90°-Winkel bilden.

3. Kopfstütze nach Anspruch 1 oder 2, **dadurch gekennzeichnet, dass** die Schwenkachsen (a3, a6) der dritten Scharniergelenke der ersten Gelenkeinheit (19) und der zweiten Gelenkeinheit (20) einen 90°-Winkel mit einer Achse bilden, die parallel zu der Bewegungsrichtung (x1, x2) des Kopfanlageteils (16) ausgebildet ist.

4. Kopfstütze nach einem der vorangehenden Ansprüche, **dadurch gekennzeichnet, dass** der erste Lenker (25, 27) und der zweite Lenker (26, 28) jeder Gelenkeinheit (19, 20) einen Winkel (α, β) bilden und dass sich die Lenker in der Grundstellung in einer gefalteten Position und in der Ausfahrstellung in einer gestreckten Stellung zueinander befinden.

5. Kopfstütze nach einem der vorangehenden Ansprüche, **dadurch gekennzeichnet, dass** der erste Lenker (25, 27) erste Anschlagmittel und der zweite Lenker (26, 28) zweite Anschlagmittel ausbildet, wobei in der gestreckten Position der Eingriff der Anschlagmittel einen Maximalwinkel (α, β) der Lenker definiert.

6. Kopfstütze nach Anspruch 5, **dadurch gekennzeichnet, dass** der Maximalwinkel ≤180° beträgt.

7. Kopfstütze nach einem der vorangehenden Ansprüche, **dadurch gekennzeichnet, dass** die Führungsvorrichtung (52) zwei erste Gelenkeinheiten (50a, 50b) und zwei zweite Gelenkeinheiten (51a, 51b) umfasst.

8. Kopfstütze nach Anspruch 7, **dadurch gekennzeichnet, dass** die beiden ersten Gelenkeinheiten (50a, 50b) und die beiden zweiten Gelenkeinheiten (51a, 51b) voneinander beabstandet sind.

9. Kopfstütze nach Anspruch 7 oder 8, **dadurch gekennzeichnet, dass** zwei Gelenkeinheiten (50a, 50b) bezüglich einer Erstreckung des Kopfanlageteils (16) in Y-Richtung an gegenüberliegenden Endbereichen befestigt sind und dass die beiden anderen Gelenkeinheiten (51a, 51b) bezüglich einer Erstreckung des Kopfanlageteils (16) in Z-Richtung an gegenüberliegenden Endbereichen des Kopfanlageteils (16) befestigt sind.

10. Kopfstütze nach einem der vorangehenden Ansprüche, **dadurch gekennzeichnet, dass** die Lenker (25, 26, 27, 28) in einer Raumdimension flachbauend ausgebildet sind.

11. Kopfstütze nach einem der vorangehenden Ansprüche, **dadurch gekennzeichnet, dass** die Verriegelungsvorrichtung (29) wenigstens zwei Stützeinrichtungen umfassend wenigstens einen Lenker (30, 31, 32, 33) umfasst, wobei der Lenker in der Grundstellung etwa parallel zu einer von der Basis (13) aufgespannten Ebene angeordnet ist und in der Ausfahrstellung einen Winkel mit der Ebene bildet.

12. Kopfstütze nach einem der vorangegangenen Ansprüche, **dadurch gekennzeichnet, dass** eines der Bauteile von Basis (13) oder Kopfanlageteil (16) eine Gelenkführung für den zweiten Bereich des Lenkers ausbildet, in welcher ein Vorsprung des Lenkers auf einer Bahn in zwei entgegengesetzte Bahnorientierungen geführt ist.

## Claims

1. Headrest, having a base (13) and a headrest part (16), having a guiding device (18, 52) which is connected with the headrest part (16) and is connected with the base (13), by means of which the headrest part (16) is moveable relative to the base (13) in the direction (x1) of the head of the seated passenger and in the opposite direction (x2), between a rear basic position and a forward drive position, and having a locking mechanism device (29, 49), with which the headrest part (16) is lockable in at least one position, wherein the guiding device (18, 52) comprises a first joint unit (19) and at least one second joint unit (20), wherein each joint unit (19, 20) comprises at least two guides (25, 26; 27, 28), wherein a first guide (25, 27) forms a first hinge joint (G1, G4) with the base (13), and a second guide (26, 28) forms a second hinge joint (G2, G5) with the headrest part (16), and wherein the first guide (25, 27) and the second guide (26, 28) form a third hinge joint (G3, G6), wherein pivot axes (a1, a2, a3/ a4, a5, a6) of all hinge joints (G1, G2, G3/ G4, G5, G6) of the respective joint unit (19, 20) are arranged parallel, **characterised in that** the locking mechanism device (29) has a first piece of supporting equipment (45a, 46a) on a first side of the headrest part (16), and a second piece of supporting equipment (45b, 46b) on a side of the headrest part opposite the first side, wherein each piece of supporting equipment comprises at least one guide (30, 31, 32, 33), and wherein a first area of the guide (30, 31, 32, 33) forms a joint with the base (13) or with the headrest part (16), and a second area of the guide (30, 31, 32, 33) is guided moveably into different positions, and is lockable in at least one position by means of a bolt (41).

2. Headrest according to claim 1, **characterised in that** the pivot axes (a1, a2, a3) of the hinge joints of the first joint unit (19) and the pivot axes (a4, a5, a6) of the second joint unit (20) form an angle of approximately 90°.

3. Headrest according to claim 1 or 2, **characterised in that** the pivot axes (a3, a6) of the third hinge joints of the first joint unit (19) and the second joint unit (20) form a 90° angle with an axis which is formed parallel to the direction of movement (x1, x2) of the headrest part (16).

4. Headrest according to one of the preceding claims, **characterised in that** the first guide (25, 27) and the second guide (26, 28) of each joint unit (19, 20) form an angle (a, β) and that the guides are located in a folded position in the basic position and in a stretched position towards one another in the drive position.

5. Headrest according to one of the preceding claims, **characterised in that** the first guide (25, 27) forms first lifting means and the second guide (26, 28) forms second lifting means, wherein the intervention of the lifting means defines a maximal angle (a, β) of the guides in the stretched position.

6. Headrest according to claim 5, **characterised in that** the maximum angle amounts to ≤ 180°.

7. Headrest according to one of the preceding claims, **characterised in that** the guiding device (52) comprises two first joint units (50a, 50b) and two second joint units (51a, 51b).

8. Headrest according to claim 7, **characterised in that** the two first joint units (50a, 50b) and the two second joint units (51a, 51b) are spaced apart from each other.

9. Headrest according to claim 7 or 8, **characterised in that** two joint units (50a, 50b) are fixed relative to an extension of the headrest part (16) in the y-direction to opposite end regions, and that both of the other joint units (51a, 51b) are fixed relative to an extension of the headrest part (16) in a z-direction to opposite end regions of the headrest part (16).

10. Headrest according to one of the preceding claims **characterised in that** the guides (25, 26, 27, 28) are formed with a flat design in a spatial dimension.

11. Headrest according to one of the preceding claims, **characterised in that** the locking mechanism device (29) comprises at least two pieces of support equipment comprising at least one guide (30, 31, 32, 33), wherein the guide, in the basic position, is arranged approximately parallel to a plane spanned from the base (13) and, in the driving position, forms an angle with the plane.

12. Headrest according to one of the preceding claims, **characterised in that** one of the components of the base (13) or the headrest (16) forms a joint alignment for the second area of the guide, in which a projection of the guide is steered on a track in two opposite track orientations.

## Revendications

1. Appuie-tête avec une embase (13) et une partie repose-tête (16) avec un dispositif de guidage (18, 52) qui est relié à la partie repose-tête (16) et relié à l'embase (13), au moyen duquel la partie repose-tête (16) peut être déplacée par rapport à l'embase (13) en direction (x1) de la tête de l'occupant du siège et en sens inverse (x2) entre une position de repos arrière et une position d'extension, et avec un dispositif de verrouillage (29, 49) au moyen duquel la partie repose-tête (16) peut être verrouillée dans au moins une position, le dispositif de guidage (18, 52) comprenant au moins une première unité d'articulation (19) et au moins une deuxième unité d'articulation (20), chaque unité d'articulation (19, 20) comportant au moins deux bras (25, 26 ; 27, 28), un premier bras (25, 27) formant une première articulation à charnière (G1, G4) avec l'embase (13) et un deuxième bras (26, 28) formant une deuxième articulation à charnière (G2, G5) avec la partie repose-tête (16) et le premier bras (25, 27) et le deuxième bras (26, 28) formant entre eux une troisième articulation à charnière (G3, G6), les axes de pivotement (a1, a2, a3 / a4, a5, a6) de toutes les articulations à charnière (G1, G2, G3 / G4, G5, G6) d'une unité d'articulation (19, 20) étant disposés parallèlement, **caractérisé en ce que** le dispositif de verrouillage (29) présente un premier dispositif d'appui (45a, 46a) sur un premier côté de la partie repose-tête (16) et un deuxième dispositif d'appui (45b, 46b) sur un côté de la partie repose-tête (16) opposé au premier côté, chaque dispositif d'appui comportant au moins un bras (30, 31, 32, 33) et une première zone du bras (30, 31, 32, 33) formant une articulation avec l'embase (13) ou la partie repose-tête et une deuxième zone du bras (30, 31, 32, 33) pouvant être guidé de manière mobile dans différentes positions au moyen d'un élément de guidage et pouvant être verrouillé dans au moins une position au moyen d'un verrou (41).

2. Appuie-tête selon la revendication 1, **caractérisé en ce que** les axes de pivotement (a1, a2, a3) des articulations à charnière de la première unité d'articulation (19) et les axes de pivotement (a4, a5, a6) de la deuxième unité d'articulation (20) forment sensiblement un angle à 90°.

3. Appuie-tête selon la revendication 1 ou 2, **caractérisé en ce que** les axes de pivotement (a3, a6) des troisièmes articulations à charnière de la première unité d'articulation (19) et de la deuxième unité d'articulation (20) forment un angle à 90° avec un axe qui est orienté parallèlement à la direction de déplacement (x1, x2) de la partie repose-tête (16).

4. Appuie-tête selon une des revendications précédentes, **caractérisé en ce que** le premier bras (25, 27) et le deuxième bras (26, 28) de chaque unité d'articulation (19, 20) forment un angle (α, β) et que les bras se trouvent mutuellement dans une position pliée dans la position de repos et dans une position étirée dans la position d'extension.

5. Appuie-tête selon une des revendications précédentes, **caractérisé en ce que** le premier bras (25, 27) forme des premiers moyens de butée et le deuxième bras (26, 28) des deuxièmes moyens de butée, l'engagement des moyens de butée définissant dans la position d'extension un angle maximum (α, β) des bras.

6. Appuie-tête la revendication 5, **caractérisé en ce que** l'angle maximum est ≤ 180°.

7. Appuie-tête selon une des revendications précédentes, **caractérisé en ce que** le dispositif de guidage (52) comprend deux premières unités d'articulation (50a, 50b) et deux deuxièmes unités d'articulation (51a, 51b).

8. Appuie-tête selon la revendication 7, **caractérisé en ce que** les deux premières unités d'articulation (50a, 50b) et les deux deuxièmes unités d'articulation (51a, 51b) sont distantes les unes des autres.

9. Appuie-tête selon la revendication 7 ou 8, **caractérisé en ce que** deux unités d'articulation (50a, 50b) sont fixées à des extrémités opposées entre elles par rapport à une extension de la partie repose-tête (16) dans la direction Y et que les deux autres unités d'articulation (51a, 51b) sont fixées à des extrémités de la partie repose-tête (16) opposées entre elles par rapport à une extension de partie repose-tête (16) dans la direction Z.

10. Appuie-tête selon une des revendications précédentes, **caractérisé en ce que** les bras (25, 26, 27, 28) sont configurés à plat dans une dimension spatiale.

11. Appuie-tête selon une des revendications précédentes, **caractérisé en ce que** le dispositif de verrouillage (29) comprend au moins deux dispositifs d'appui comprenant au moins un bras (30, 31, 32, 33), le bras étant disposé dans la position de repos sensiblement parallèlement à un plan défini par l'embase (13) et formant dans la position d'extension un angle avec ce plan.

12. Appuie-tête selon une des revendications précédentes, **caractérisé en ce qu'**un des éléments de l'embase (13) ou de la partie repose-tête (16) constitue un dispositif de guidage articulaire pour la deuxième zone du bras dans lequel une saillie du bras est guidée sur une piste dans deux orientations opposées.
